# EUROPÄISCHE PATENTSCHRIFT

(11) **EP 0 897 489 B1**
(45) Veröffentlichungstag und Bekanntmachung des Hinweises auf die Patenterteilung: **29.12.1999**
(21) Anmeldenummer: 97922875.6
(22) Anmeldetag: 28.04.1997
(51) Int. Cl.: F16F 9/05, F16C 29/02, F16C 23/04

(54) **LUFTFEDER**
PNEUMATIC SPRING
RESSORT PNEUMATIQUE

(30) Priorität: 07.05.1996 DE 19618168
(43) Veröffentlichungstag der Anmeldung: 24.02.1999
(73) Patentinhaber: PHOENIX AKTIENGESELLSCHAFT, 21079 Hamburg (DE)
(72) Erfinder: LAMBRECHT, Dirk, D-21129 Hamburg (DE); OERTEL, Holger, D-21644 Revenahe (DE)
(86) Internationale Anmeldenummer: DE9700854
(87) Internationale Veröffentlichungsnummer: WO9742429

(56) Entgegenhaltungen:
- WO-A-94/13967
- WO-A-95/09092
- DE-A- 3 828 203
- GB-A- 2 284 237
- US-A- 3 765 733
- PATENT ABSTRACTS OF JAPAN vol. 096, no. 001, 31.Januar 1996 & JP 07 243475 A (KAJIMA CORP), 19.September 1995,

## Beschreibung

Die Erfindung betrifft eine Luftfeder, insbesondere für Schienenfahrzeuge, Nutzfahrzeuge und Busse, umfassend einen Balg aus elastomerem Werkstoff, der gegebenenfalls mit Verstärkungseinlagen versehen ist; einen Topf, an dessem oberen Teil der Balg befestigt ist, wobei der Balg vorzugsweise an der Außenwand des Topfes entlang abrollt; einen in Abstand zum Topf angeordneten plattenförmigen Deckel, an dem das andere Ende des Balges befestigt ist; eine mittig angeordnete Stange, die mit dem Deckel fest verbunden ist und dabei insbesondere in einem Überstand aus dem Deckel herausragt, wobei ferner die Stange zu dem Balg parallel verlaufend in den Topf eintaucht; ein Kugelgelenk, das sich zwischen dem Topf und der Stange befindet und dabei an der Innenwand des Topfes anliegt; sowie eine Luftführung (DE-A-38 28 203, EP-A- 0 554 573).

In modernen Schienenfahrzeugen beispielsweise werden häufig luftfedern als Sekundärfedersystem eingesetzt. Dieses Sekundärfedersystem soll nun horizontale Kräfte bis 20 KN statisch an das Drehgestell leiten können, und zwar vom Wagenkasten. Dabei sind Winkelauslenkungen bis 7° möglich. Ferner werden bei geringen Bauhöhen und bei einem geringen Gewicht große vertikale Verfahrwege gefordert.

Zwecks Lösung dieser Aufgabe wird nun erfindungsgemäß eine gattungsgemäße Luftfeder vorgeschlagen, die gemäß Kennzeichen des Patentanspruches 1 kombinativ folgende zusätzliche Teile umfaßt:
- eine Gleitbuchse, die zwischen dem Kugelgelenk und der Stange angeordnet ist und dabei gleitend an der Außenwand der Stange anliegt; sowie
- eine Zwischenbuchse, die zwischen dem Kugelgelenk und der Gleitbuchse vorhanden ist.

Die Zwischenbuchse, Gleitbuchse und das Kugelgelenk umlaufen dabei die Stange zylindrisch. Die Stange (auch Führungswelle genannt) bildet also den Kern des Gesamtsystemes.

Die Gleitbuchse und die Zwischenbuchse sind vorzugsweise jeweils einstückig ausgebildet. Die Gleitbuchse mit einer Mindestwandstärke von 0,1 mm besteht dabei aus einem gleiffähigen Kunststoff, insbesondere aus Polytetrafluorethylen. Zwecks besserer Montage weist die Gleitbuchse in Achsrichtung einen schräg und durchgehend verlaufenden Schlitz auf. Was die Zwischenbuchse betrifft, so wird ein wärmeleiffähiger Werkstoff, insbesondere Aluminium, verwendet. Mit der Verwendung von Aluminium ist auch eine erhebliche Gewichtsreduzierung verbunden.

Ferner ist es zweckmäßig, wenn die Zwischenbuchse an ihrer Innenwand eine Aussparung aufweist, in der die Gleitbuchse mit etwa der halben Wandstärke einsitzt. Die Außenfläche der Zwischenbuchse ist ebenfalls mit einer Aussparung versehen, in der das Kugelgelenk mit seinem Innenteil einsitzt.

Hinsichtlich der Luftführung kommen zweckmäßigerweise folgende Varianten zur Anwendung:
- Die Rohrstange ist mit wenigstens einer Öffnung versehen, die den in Achsrichtung durchgehend verlaufenden Stangeninnenraum mit dem Luftfederraum verbindet.
- Innerhalb der Zwischenbuchse ist in Achsrichtung wenigstens einle durchgehend verlaufende/r Kanal oder Außennut angeordnet, der/die mit dem Luftfederraum in Verbindung steht. Vorteilhafterweise sind dabei mehrere Kanäle oder Außennuten vorhanden, die im wesentlichen in gleichen Abständen über den gesamten Umfang der Zwischenbuchse verteilt vorhanden sind. Auf diese Weise wird zusätzlich für eine Luftkühlung gesorgt.

Auch die Kombination beider Luftführungsvarianten ist möglich.

Weitere zweckmäßige Ausgestaltungen der erfindungsgemäßen Luftfeder sind:
- Die Innenwand der Rohrstange ist im Bereich der Gleitbuchse konisch ausgebildet, und zwar unter Vergrößerung des Durchmessers des Stangeninnenraumes, was zu einer Gewichtseinspraung führt. Auch eine Optimierung der Luftführung ist hiermit verbunden.
- Der Durchmesser des Kugelgelenkes beträgt 100 bis 200 mm, insbesondere 130 bis 150 mm, und zwar bezogen auf den durchmesserkleinsten Bauteil. Bei Verwendung eines dreischichtigen Metall-Elastomer-Verbundes weist die mittig angeordnete Elastomerschicht eine Stärke von 5 bis 15 mm, insbesondere 6 bis 10 mm, auf.
- Das Kugelgelenk ist zum Luftfederunterteil hin abgesichert, insbesondere in Form von wenigstens einem Sicherungsring.
- Die Zwischenbuchse ist ebenfalls zum Luftfederunterteil hin abgesichert, insbesondere in Form eines Sicherungsringes, der in einer Einkerbung, die sich innerhalb der Außenfläche der Zwischen buchse befindet, einrastet.

Die Erfindung wird nun anhand eines Ausführungsbeispiels unter Bezugnahme auf schematische Zeichnungen erläutert. Es zeigen:
Fig. 1 einen Achsialschnitt der Luftfeder;
Fig. 2 einen Radialschnitt der Zwischenbuchse.

In Verbindung mit diesen Figuren gilt dabei folgende Bezugsziffernliste:
1 plattenförmiger Deckel
2 Topf(Abrollkolben)
3 Balg aus elastomerem Werkstoff (Gummi oder gummiähnlichem Kunststoff)
4 Flansch
5 Zwischenbuchse
6 Gleitbuchse
7 Kugelgelenk als dreischichtiger Metall-Elastomer-Verbund
8 Paßscheibe
9 Sicherungsring
10 O-Ring
11 O-Ring
12 Einschweißschraube
13 Sechskantmutter
14 Scheibe
15 Gewindeeinsatz
16 Gewindeeinsatz
17 Innensechskant
18 Sicherungsring
19 Luftführung innerhalb der Stange
20 Luftführung innerhalb der Zwischenbuchse
21 Stangeninnenraum
22 Luftfederraum
23 Aussparung an der Innenwand der Zwischenbuchse
24 Aussparung an der Außenwand der Zwischenbuchse
A Stange (Rohrstange)
B Überstand
C Konusbereich
X Achsrichtung

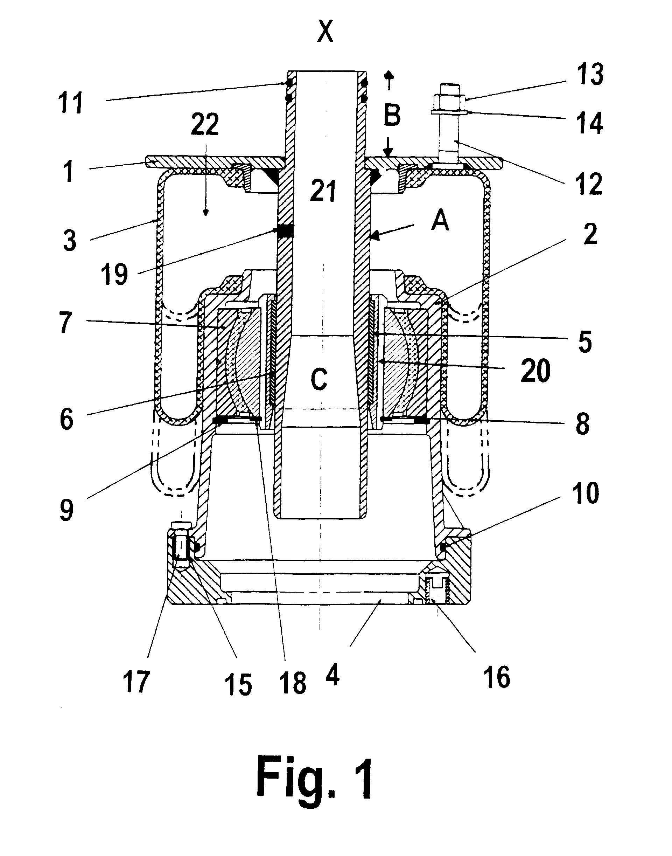

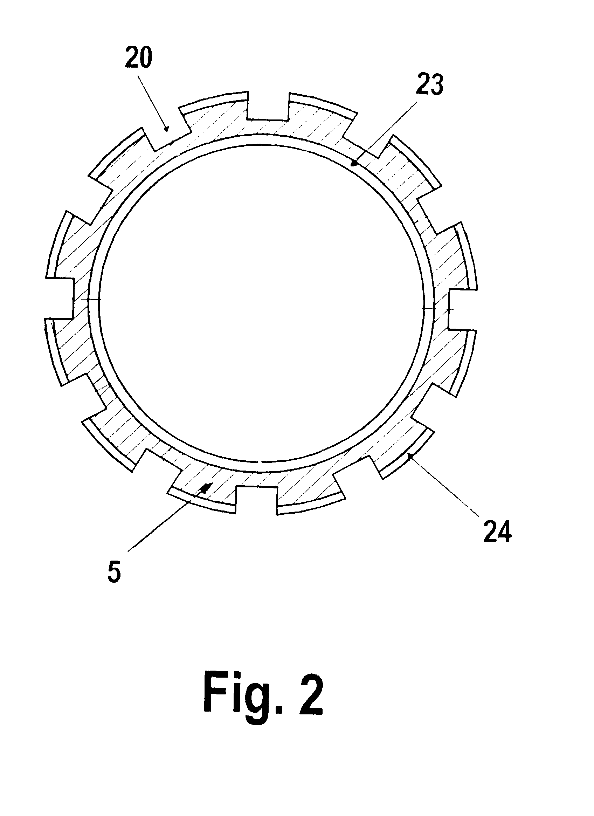

Nach Fig. 1 besitzt die Zwischenbuchse (5) an ihrer Innenwand eine Aussparung (23; Fig. 2), in der die Gleitbuchse mit etwa der halben Wandstärke einsitzt und dabei gleitend an der Außenwand der Rohrstange (A) anliegt. Ferner ist die Zwischenbuchse (5) an ihrer Außenwand ebenfalls mit einer Aussparung (24; Fig. 2) versehen, in der das Kugelgelenk (7) als dreischichtiger Metall-Elastomer-Verbund mit seinem Innenteil einsitzt. Zwecks Absicherung des Kugelgelenkes (7) und der Zwischenbuchse (5) sind zum Luftfederunterteil hin zwei Sicherungsringe (9, 18) vorhanden, wobei der Sicherungsring (18) in einer Einkerbung, die sich innerhalb der Außenwand der Zwischenbuchse befindet, einrastet. Die Rohrstange (A) umfaßt als Luftführung (19) wenigstens eine Öffnung, die den Stangeninnenraum (21) mit dem Luftfederraum (22) verbindet. Außerdem ist die Rohrstange (A) im Bereich (C) der Gleitbuchse (6) konisch ausgebildet, und zwar unter Vergrößerung des Durchmessers des Stangeninnenraumes (21).

Fig. 2 zeigt eine Luftführung (20), die innerhalb der Zwischenbuchse (5) in Achsrichtung (X; Fig. 1) angeordnet ist und dabei mit dem Luftfederraum in Verbindung steht. Die Luftführung besteht hier aus mehreren Außennuten, die im wesentlichen in gleichen Abständen über den gesamten Umfang der Zwischenbuchse (5) verteilt vorhanden sind. Die Zwischenbuchse ist an ihrer Innen- und Außenwand mit Aussparungen (23, 24) versehen, deren Bedeutung in Verbindung mit der Figurenbeschreibung 1 bereits dargelegt wurde.

## Patentansprüche

1. Luftfeder, insbesondere für Schienenfahrzeuge, Nutzfahrzeuge und Busse, umfassend
- einen Balg (3) aus elastomerem Werkstoff, der gegebenenfalls mit Verstärkungseinlagen versehen ist;
- einen Topf (2), an dessem oberen Teil der Balg (3) befestigt ist, wobei der Balg vorzugsweise an der Außenwand des Topfes entlang abrollt;
- einen in Abstand zum Topf (2) angeordneten plattenförmigen Deckel (1), an dem das andere Ende des Balges (3) befestigt ist;
- eine mittig angeordnete Stange (A), die mit dem Deckel (1) fest verbunden ist und dabei insbesondere in einem Überstand (B) aus dem Deckel herausragt, wobei ferner die Stange zu dem Balg (3) parallel verlaufend in den Topf (2) eintaucht;
- ein Kugelgelenk (7), das sich zwischen dem Topf (2) und der Stange (A) befindet und dabei an der Innenwand des Topfes anliegt; wobei das Kugelgelenk vorzugsweise ein Metall-Elastomer-Verbund ist, der dreischichtig ist, und zwar gebildet aus zwei Metallschichten und einer mittig angeordneten Elastomerschicht; sowie
- eine Luftführung (19, 20);
dadurch gekennzeichnet, daß
- zwischen dem Kugelgelenk (7) und der Stange (A) eine Gleitbuchse (6) angeordnet ist, die dabei gleitend an der Außenwand der Stange anliegt; sowie ferner
- eine Zwischenbuchse (5), die sich zwischen dem Kugelgelenk (7) und der Gleitbuchse (6) befindet, vorhanden ist;
- wobei die Zwischenbuchse (5), die Gleitbuchse (6) und das Kugelgelenk (7) die Stange (A) zylindrisch umlaufen.

2. Luftfeder nach Anspruch 1, dadurch gekennzeichnet, daß die Stärke der Elastomerschicht des Kugelgelenkes (7) 5 bis 15 mm, insbesondere 6 bis 10 mm, beträgt.

3. Luftfeder nach Anspruch 1 oder 2, dadurch gekennzeichnet, daß der Durchmesser des Kugelgelenkes (7) 100 bis 200 mm, insbesondere 130 bis 150 mm, beträgt, und zwar bezogen auf den durchmesserkleinsten Bauteil.

4. Luftfeder nach einem der Ansprüche 1 bis 3, dadurch gekennzeichnet, daß die Stange (A) rohrförmig ausgebildet ist, insbesondere unter Bildung eines in Achsrichtung (X) durchgehend verlaufenden Stangeninnenraumes (21).

5. Luftfeder nach Anspruch 4, dadurch gekennzeichnet, daß die Innenwand der rohrförmigen Stange (A) im Bereich (C) der Gleitbuchse (6) konisch ausgebildet ist, und zwar unter Vergrößerung des Durchmessers des Stangeninnenraumes (21).

6. Luftfeder nach einem der Ansprüche 1 bis 5, dadurch gekennzeichnet, daß die Gleitbuchse (6) und die Zwischenbuchse (5) jeweils einstückig ausgebildet sind.

7. Luftfeder nach einem der Ansprüche 1 bis 6, dadurch gekennzeichnet, daß die Gleitbuchse (6) aus einem gleiffähigen Kunststoff, insbesondere aus Polytetrafluorethylen, besteht.

8. Luftfeder nach einem der Ansprüche 1 bis 7, dadurch gekennzeichnet, daß die Gleitbuchse (6) eine Mindestwandstärke von 0,1 mm aufweist.

9. Luftfeder nach einem der Ansprüche 1 bis 8, dadurch gekennzeichnet, daß die Gleitbuchse (6) in Achsrichtung (X) einen schräg und durchgehend verlaufenden Schlitz aufweist.

10. Luftfeder nach einem der Ansprüche 1 bis 9, dadurch gekennzeichnet, daß die Zwischenbuchse (5) aus einem wärmeleiffähigen Werkstoff, insbesondere aus Aluminium, besteht.

11. Luftfeder nach einem der Ansprüche 1 bis 10, dadurch gekennzeichnet, daß die Zwischenbuchse (5) an ihrer Innenwand eine Aussparung (23) aufweist, in der die Gleitbuchse (6) mit etwa der halben Wandstärke einsitzt.

12. Luftfeder nach einem der Ansprüche 1 bis 11, dadurch gekennzeichnet, daß die Zwischenbuchse (5) an ihrer Außenwand eine Aussparung (24) aufweist, in der das Kugelgelenk (7) mit seinem Innenteil einsitzt.

13. Luftfeder nach einem der Ansprüche 1 bis 12, insbesondere in Verbindung mit Anspruch 4, dadurch gekennzeichnet, daß die Luftführung (19) wenigstens eine Öffnung umfaßt, die den Stangeninnenraum (21) mit dem Luftfederraum (22) verbindet.

14. Luftfeder nach einem der Ansprüche 1 bis 13, dadurch gekennzeichnet, daß die Luftführung (20) wenigstens eine/n durchgehend verlaufende/n Kanal oder Außennut umfaßt, der/die innerhalb der Zwischenbuchse (5) in Achsrichtung (X) angeordnet ist und dabei mit dem Luftfederraum (22) in Verbindung steht.

15. Luftfeder nach Anspruch 14, dadurch gekennzeichnet, daß die Luftführung (20) aus mehreren Kanälen oder Außennuten besteht, die im wesentlichen in gleichen Abständen über den gesamten Umfang der Zwischenbuchse (5) verteilt vorhanden sind.

16. Luftfeder nach einem der Ansprüche 1 bis 15, dadurch gekennzeichnet, daß das Kugelgelenk (7) zum Luftfederunterteil hin abgesichert ist, insbesondere in Form von wenigstens einem Sicherungsring (9, 18).

17. Luftfeder nach einem der Ansprüche 1 bis 16, dadurch gekennzeichnet, daß die Zwischenbuchse (6) zum Luftfederunterteil hin abgesichert ist, insbesondere in Form eines Sicherungsringes (18), der in einer Einkerbung, die sich innerhalb der Außenwand der Zwischen buchse (5) befindet, einrastet.

## Claims

1. Air spring, in particular for rail vehicles, commercial vehicles and buses, comprising
- a bellows (3) made of elastomer material which when necessary is provided with reinforcing inlays;
- a pot (2) to whose upper part the bellows (3) is secured, the bellows preferably rolling along the outer wall of the pot;
- a plate-shaped cover (1) which is disposed a distance from the pot (2) and to which the other end of the bellows (3) is secured;
- a centrally disposed rod (A) which is connected firmly to the cover (1) and in particular projects out of the cover by a distance (B), the rod also running parallel to the bellows (3) and passing into the pot (2);
- a ball joint (7) which is located between the pot (2) and the rod (A) and bears on the inner wall of the pot, the ball joint preferably being a metal-elastomer composite which has three layers and is formed of two layers of metal and one centrally disposed layer of elastomer, and
- an air duct (19, 20),
characterised in that
- a sliding bush (6) is disposed between the ball joint (7) and the rod (A), which bush bears slidingly on the outer wall of the rod, and further
- an intermediate bush (5) is present, which bush is located between the ball joint (7) and the sliding bush (6);
- the intermediate bush (5), the sliding bush (6) and the ball joint (7) surrounding the rod (A) cylindrically.

2. Air spring according to claim 1, characterised in that the thickness of the elastomer layer of the ball joint (7) is 5 to 15 mm, in particular 6 to 10 mm.

3. Air spring according to claim 1 or 2, characterised in that the diameter of the ball joint (7) is 100 to 200 mm, in particular 130 to 150 mm, related to the component with the smallest diameter.

4. Air spring according to one of claims 1 to 3, characterised in that the rod (A) is tubular in form, in particular forming a rod inner space (21) running continuously in the axial direction (X).

5. Air spring according to claim 4, characterised in that the inner wall of the tubular rod (A) is conical in form in the area (C) of the sliding bush (6), increasing the diameter of the rod inner space (21).

6. Air spring according to one of claims 1 to 5, characterised in that the sliding bush (6) and the intermediate bush (5) are in each case formed in one piece.

7. Air spring according to one of claims 1 to 6, characterised in that the sliding bush (6) is made of a sliding plastic, in particular of polytetrafluorethylene.

8. Air spring according to one of claims 1 to 7, characterised in that the sliding bush (6) has a minimum wall thickness of 0.1 mm.

9. Air spring according to one of claims 1 to 8, characterised in that in the axial direction (X) the sliding bush (6) exhibits a slot running obliquely and continuously.

10. Air spring according to one of claims 1 to 9, characterised in that the intermediate bush (5) is made of a heat conducting material, in particular of aluminium.

11. Air spring according to one of claims 1 to 10, characterised in that on its inner wall the intermediate bush (5) exhibits a recess (23) in which the sliding bush (6) sits with roughly half its wall thickness.

12. Air spring according to one of claims 1 to 11, characterised in that on its outer wall the intermediate bush (5) exhibits a recess (24) in which the ball joint (7) sits with its inner part.

13. Air spring according to one of claims 1 to 12, in particular in connection with claim 4, characterised in that the air duct (19) comprises at least one opening which connects the rod inner space (21) to the pneumatic spring space (22).

14. Air spring according to one of claims 1 to 13, characterised in that the air duct (20) comprises at least one passage or outer groove which runs continuously and which is disposed inside the intermediate bush (5) in the axial direction (X) and communicates with the air spring space (22).

15. Air spring according to claim 14, characterised in that the air duct (20) consists of a plurality of passages or outer grooves which essentially are present distributed at equal distances over the entire circumference of the intermediate bush (5).

16. Air spring according to one of claims 1 to 15, characterised in that the ball joint (7) is secured towards the lower part of the pneumatic spring, in particular in the form of at least one circlip (9, 18).

17. Air spring according to one of claims 1 to 16, characterised in that the intermediate bush (6) is secured towards the lower part of the pneumatic spring, in particular in the form of a circlip (18) which engages in a notch which is located inside the outer wall of the intermediate bush (5).

## Revendications

1. Ressort pneumatique, en particulier pour véhicules ferroviaires, véhicules utilitaires et autobus, comprenant :
- un soufflet (3) constitué d'un matériau élastomère qui, le cas échéant, est doté d'inserts de renforcement;
- un pot (2), à l'extrémité supérieure duquel le soufflet (3) est fixé, le soufflet se déroulant de préférence le long de la paroi extérieure du pot;
- un couvercle (1) en forme de plaque, disposé à distance du pot (2), sur lequel l'autre extrémité du soufflet (3) est fixée;
- une barre (A) disposée centralement, reliée rigidement au couvercle (1) et sortant alors en particulier du couvercle avec un dépassement (B), en outre la barre plongeant dans le pot (2) en s'étendant parallèlement au soufflet (3);
- une articulation sphérique (7), se trouvant entre le pot (2) et la barre (A) et appuyant alors sur la paroi intérieure du pot, l'articulation sphérique étant de préférence un composite métal-élastomère, à trois couches, et précisément constitué de deux couches métalliques et d'une couche élastomère disposée centralement; et
- un guidage d'air (19, 20),
caractérisé en ce que
- entre l'articulation sphérique (7) et la barre (A) est disposée une douille de glissement (7), qui appuie alors avec glissement sur la paroi extérieure de la barre; ainsi qu'en outre
- une douille intermédiaire (5), qui est prévue entre l'articulation sphérique (7) et la douille de glissement (6);
- la douille intermédiaire (5), la douille de glissement (6) et l'articulation sphérique (7) entourant cylindriquement la barre (A).

2. Ressort pneumatique selon la revendication (1), caractérisé en ce que l'épaisseur de la couche élastomère de l'articulation sphérique (3) est de 5 à 15 mm, en particulier de 6 à 10 mm.

3. Ressort pneumatique selon la revendication 1 ou 2, caractérisé en ce que le diamètre de l'articulation sphérique (7) est de 100 à 200 mm, en particulier de 130 à 150 mm et, précisément, en se référant au composant ayant le plus petit diamètre.

4. Ressort pneumatique selon l'une des revendications 1 à 3, caractérisé en ce que la barre (A) est de forme tubulaire, en particulier en constituant un espace intérieur de barre (21) qui s'étend continûment dans la direction axiale (X).

5. Ressort pneumatique selon la revendication 4, caractérisé en ce que la paroi intérieure de la barre tubulaire (A) est conique dans la zone (C) de la douille de glissement (6) et, précisément, avec un agrandissement du diamètre de l'espace intérieur de barre (21).

6. Ressort pneumatique selon l'une des revendications 1 à 5, caractérisé en ce que la douille de glissement (6) et la douille intermédiaire (5) sont chacune réalisées d'une seule pièce.

7. Ressort pneumatique selon l'une des revendications 1 à 6, caractérisé en ce que la douille de glissement (6) est constituée d'une matière plastique apte au glissement, en particulier de polytétrafluoroéthylène.

8. Ressort pneumatique selon l'une des revendications 1 à 7, caractérisé en ce que la douille de glissement (6) présente une épaisseur de paroi minimale de 0,1 mm.

9. Ressort pneumatique selon l'une des revendications 1 à 8, caractérisé en ce que la douille de glissement (6) présente dans la direction axiale (X) une fente s'étendant obliquement et continûment.

10. Ressort pneumatique selon l'une des revendications 1 à 9, caractérisé en ce que la douille intermédiaire (5) est réalisée en un matériau conducteur de la chaleur, en particulier en aluminium.

11. Ressort pneumatique selon l'une des revendications 1 à 10, caractérisé en ce que la douille intermédiaire (5) présente sur sa paroi intérieure un évidement (23), dans lequel se place la douille de glissement (6), ayant à peu près une épaisseur de paroi de valeur de la moitié.

12. Ressort pneumatique selon l'une des revendications 1 à 11, caractérisé en ce que la douille intermédiaire (5) présente sur sa paroi extérieure un évidement (24), dans lequel l'articulation sphérique (7) s'insère par sa partie intérieure.

13. Ressort pneumatique selon l'une des revendications 1 à 12, en particulier en liaison avec la revendication 4, caractérisé en ce que le guidage d'air (19) comprend une ouverture qui relie l'espace intérieur de barre (21) à l'espace de ressort pneumatique (22).

14. Ressort pneumatique selon l'une des revendications 1 à 13, caractérisé en ce que le guidage d'air (20) comprend au moins un canal ou rainure extérieure s'étendant continûment, qui est disposé à l'intérieur de la douille intermédiaire (5) dans la direction axiale (X) et est alors relié à l'espace de ressort pneumatique (22).

15. Ressort pneumatique selon la revendication 14, caractérisé en ce que le guidage d'air (20) est constitué de plusieurs canaux ou rainures extérieures, prévu(e)s de façon distribuée sensiblement selon des espacements identiques sur la totalité de la périphérie de la douille intermédiaire (5).

16. Ressort pneumatique selon l'une des revendications 1 à 15, caractérisé en ce que l'articulation sphérique (7) est assurée vis-à-vis de la partie inférieure du ressort pneumatique, en particulier sous la forme d'au moins une bague de sécurité (9, 18).

17. Ressort pneumatique selon l'une des revendications 1 à 16, caractérisé en ce que la douille intermédiaire (6) est assurée par rapport à la partie inférieure du ressort pneumatique, en particulier sous la forme d'une bague de sécurité (18) qui s'encliquette dans une entaille se trouvant à l'intérieur de la douille intermédiaire (5).
